# EUROPÄISCHE PATENTSCHRIFT

(11) **EP 1 966 576 B1**
(45) Veröffentlichungstag und Bekanntmachung des Hinweises auf die Patenterteilung: **15.06.2011**
(21) Anmeldenummer: 06830059.9
(22) Anmeldetag: 21.11.2006
(51) Int. Cl.: G01L 9/00

(54) **MIKROMECHANISCHES SENSORELEMENT**
MICROMECHANICAL SENSOR ELEMENT
ELEMENT DE DETECTION MICROMECANIQUE

(30) Priorität: 22.12.2005 DE 102005061413; 17.01.2006 DE 102006002114
(43) Veröffentlichungstag der Anmeldung: 10.09.2008
(73) Patentinhaber: ROBERT BOSCH GMBH, 70442 Stuttgart (DE)
(72) Erfinder: MUCHOW, Joerg, 72764 Reutlingen (DE); BENZEL, Hubert, 72124 Pliezhausen (DE); ARMBRUSTER, Simon, 72810 Gomaringen (DE); SCHELLING, Christoph, 72762 Reutlingen (DE)
(86) Internationale Anmeldenummer: PCT/EP2006/068711
(87) Internationale Veröffentlichungsnummer: WO 2007/073994

(56) Entgegenhaltungen:
- EP-A1- 0 404 673
- DD-A1- 267 107
- DE-A1- 4 024 780
- DE-A1- 4 108 989
- DE-B1- 2 608 381
- US-A1- 5 263 375

## Beschreibung

### Stand der Technik

Die Erfindung betrifft ein mikromechanisches Sensorelement mit einer Membran, die in einem Rahmen aufgespannt ist.

Ein derartiges Sensorelement kann beispielsweise als Mikrofon ausgelegt sein. In der Regel bestehen Mikrofone aus zwei Kondensatorplatten, wobei die eine Platte als dünne Membran realisiert ist, die durch den Schalldruck gegen die zweite Platte verschoben wird. Die Deformation der Membran wird in Form der dadurch bedingten Ladungsverschiebung im Kondensator detektiert. Im Falle eines "Kondensors" werden die Ladungen durch eine äußere Spannungsquelle geliefert, während die Ladungen im Falle eines "Electrets" in einer Kunststofffolie fest implantiert sind.

Bei den aus der Praxis bekannten mikromechanischen Mikrofonen wird die Auslenkung bzw. Deformation der Membran in der Regel kapazitiv und nicht piezoresistiv erfasst, weil die herkömmlichen piezoresistiven Drucksensoren in dem hier relevanten Druckbereich von nur 10 Pa und darunter zu unempfindlich sind. Eine Möglichkeit, die Empfindlichkeit der bekannten Drucksensoren zu erhöhen, besteht darin, die Membran dünner und größer auszubilden. Bei einer Dickenreduzierung der Membran muss allerdings berücksichtigt werden, dass die Piezowiderstände meist eine Tiefenausdehnung von ca. 3µ besitzen. D.h. die Membran sollte mindestens eine Dicke von 12µ aufweisen, da die Piezowiderstände sonst in der Nähe der neutralen Faser zu liegen kommen. Auch die Membranfläche kann nur bedingt vergrößert werden, da ansonsten nichtlineare Effekte bei der Messwerterfassung auftreten können und sich außerdem mit der Baugröße des Sensorelements auch die Kosten der gesamten Sensoranordnung erhöhen.

Aus der DD 267 107 A1 ist ein Drucksensor bekannt, der einen Verformungskörper enthält, der über biegesteifes Zentrum in einen äußeren und einen inneren Verformungskörper unterteilt wird. Außerhalb des biegesteifen Zentrums sind in dem Verformungskörper piezoresistive Widerstände integriert.

Aus der DE 26 08 381 A1 ist ein Meßumformer bekannt, bei dem die Verformung einer Membran mittels eines Dehnungsmeßstreifens in ein elektrisches Signal umgewandelt wird. Die Dehnungsmeßstreifen sind dabei an der Außenseite der Membran oder an einer mit der Membran verbundenen Biegefeder angebracht. Um die Dehnungsmeßstreifen auf gleicher Temperatur zu halten, sind Wärmeableitwiderstände mit unterschiedlichen Flächenausdehnungen vorgesehen.

Aus der EP 404 673 A1 ist ein Druckmessfühler bekannt, bei dem die Membran und ein Balken, auf dem Meßstreifen befestigt sind, aus einem einzigen Stück gefertigt sind. In dem Balken sind Kerben vorgesehen, die Kräftekonzentrationszonen bilden, wobei die Meßstreifen in der Höhe der Böden der Kerben in dem Balken angeordnet sind.

Aus der US 5,263,375 A1 ist ein Kraftsensor bekannt, bei dem mittels einer piezoresistiven Widerstandsschicht eine mechanische Verbiegung in ein elektrisches Signal umgewandelt wird.

Aus der DE 40 24 780 A1 ist ein Drucksensor bekannt, bei dem die Membran eine Versteifungszone aufweist, die dicker ausgebildet ist als in einem Bereich maximaler Zugspannung rund um die Versteifungszone. Dabei werden die zur Erfassung der Dehnung der Membran verwendeten Dickschicht-Widerstände als Kreissegmente in dem Kreisringbereich um die Versteifungszone, die dem Bereich maximaler Dehnung entspricht, angeordnet.

### Vorteile der Erfindung

Mit der vorliegenden Erfindung wird ein Sensorelement der eingangs genannten Art vorgeschlagen, das eine hohe Empfindlichkeit bei hoher Überlastfestigkeit und kleiner Baugröße aufweist und eine piezoresistive Messwerterfassung ermöglicht. Das erfindungsgemäße Sensorelement lässt sich außerdem gut weiterverarbeiten, insbesondere vereinzeln und montieren.

Dies wird dadurch erreicht, dass im Bereich der Membran mindestens ein Trägerelement ausgebildet ist, das über mindestens einen Verbindungssteg mit dem Rahmen verbunden ist, und dass im Bereich des Verbindungsstegs Piezowiderstände zur Detektion einer Deformation angeordnet sind. Die mechanische Aufhängung des Trägerelements im Rahmen wird hier in erster Linie durch die Membran gebildet, die das Trägerelement in seiner Lage zentriert. Der mindestens eine Verbindungssteg ermöglicht eine elektrische Kontaktierung von Schaltungselementen, die ggf. im Bereich des Trägerelements angeordnet sind.

Die Deformation der Membran wird mit Hilfe von Piezowiderständen erfasst. Dazu werden die Piezowiderstände in Bereichen maximaler mechanischer Spannung angeordnet. Außerdem lassen sich in einkristallinem Silizium, das häufig als Ausgangsmaterial für das hier in Rede stehende Sensorelement verwendet wird, einfach Piezowiderstände mit hohem K-Faktor realisieren, die also sehr empfindlich sind und ein hohes Ausgangssignal liefern. Einerseits ist erkannt worden, dass nicht die gesamte Membran zwangsläufig aus Silizium oder einem anderen Material gebildet werden muss, in das sich Piezowiderstände integrieren lassen, um ein piezoresistives Sensierprinzip zu realisieren. Andererseits ist erkannt worden, dass die Membranfläche auch anderweitig genutzt werden kann, beispielsweise zur Integration von Schaltungsteilen oder weiteren Sensorfunktionselementen, wenn die Membranfläche elektrisch kontaktiert werden kann.

Erfindungsgemäß ist daher vorgesehen, mindestens ein weiteres Sensorfunktionselement in das Trägerelement zu integrieren. Dadurch kann die Funktionalität des erfindungsgemäßen Sensorelements in einfacher Weise erweitert werden, ohne dass zusätzliche Chipfläche erforderlich ist.

So ist vorteilhafterweise vorgesehen; im Bereich des Trägerelements ein weiteres mikromechanisches Strukturelement auszubilden, das eine zusätzliche Sensorfunktion übernimmt. Wie bereits erwährt, wird im Rahmen des hier beschriebenen Sensorkonzepts eine piezoresistive Messwerterfassung bevorzugt. Vorteilhafterweise werden daher auch die Deformationen eines solchen Strukturelements mit Hilfe von Piezowiderständen erfasst, die dazu in den Bereichen maximaler mechanischer Spannung angeordnet werden sollten.

So wird erfindungsgemäß ein zusätzlicher Drucksensor im Bereich des Trägerelements realisiert, indem eine Kaverne unter der Membran ausgebildet wird. Die Deformation der Membran kann dann mit Hilfe von Piezowiderständen erfasst werden, die über dem Randbereich der Kaverne angeordnet sind. Ein derartiges Sensorelement kann als kombinierter Sensor für Beschleunigung oder dynamischen Druck in Verbindung mit Absolutdruck verwendet werden, insbesondere als piezoresistiver Beschleunigungssensor oder piezoresistives Mikrofon kombiniert mit einem piezoresistiven Drucksensor.

Deshalb wird vorgeschlagen, im Bereich der Membran ein Trägerelement auszubilden, das über mindestens einen Verbindungssteg mit dem Rahmen verbunden ist. Wird das erfindungsgemäße Sensorelement als Beschleunigungssensor eingesetzt, so wirkt das Trägerelement als seismische Masse, die die Deformation bzw. Auslenkung der Membran verstärkt und so die Empfindlichkeit des Sensorelements erhöht. Das Trägerelement kann einfach beim Freilegen der Membran an der Membran ausgebildet werden genauso wie der mindestens eine Verbindungssteg. Da die Piezowiderstände zur Messwerterfassung erfindungsgemäß in den Verbindungssteg integriert sind, muss er aus einem dafür geeigneten Material gebildet sein. Die übrigen Bereiche der Membran können aus einem dielektrischen Material sehr dünn ausgebildet werden. Insgesamt ist die Struktur des erfindungsgemäßen Sensorelements dadurch sehr stabil.

Mit der Erfindung wird also ein monolithisch integriertes Sensorelement mit piezoresistivem Sensierprinzip zur Verfügung gestellt. Das erfindungsgemäße Sensorkonzept ermöglicht neben der Integration der Piezowiderstände auch die Integration einer entsprechenden Auswerteschaltung. Aufgrund seiner hohen Empfindlichkeit ist das erfindungsgemäße Sensorelement nicht nur als Druck- oder Beschleunigungssensor einsetzbar sondern auch als Mikrofon und Niedrigdrucksensor. Die erfindungsgemäß einfache Sensorstruktur ist sehr robust, da die Membran die Auslenkung des Trägerelements begrenzt und so auch als Überlastschutz wirkt. Außerdem verhindert die Membran, dass sich bei der Fertigung und Verarbeitung des Sensorelements Partikel oder Staub in die Struktur setzen. Die durch die Membran geschlossene Oberfläche des Sensorelements ermöglicht den Einsatz von üblichen Aufbau- und Verbindungstechniken (AVT). Die Oberfläche kann beispielsweise in einem Add-On-Prozess mit Lithographie weiter behandelt werden. Die geschlossene Oberfläche vereinfacht auch die Montage des erfindungsgemäßen Sensorelements auf einer Leiterplatte. Dafür kann die in der Praxis häufig verwendete und bewährte Flip-Chip-Technik eingesetzt werden.

Grundsätzlich gibt es verschiedene Möglichkeiten für die Realisierung des erfindungsgemäßen Sensorelements, insbesondere was den Aufbau und die Ausbildung der Membran mit des Trägerelements betrifft.

Im Hinblick auf eine einfache Herstellung des erfindungsgemäßen Sensorelements mit Standardverfahren der Mikromechanik erweist es sich als vorteilhaft, wenn der mindestens eine Verbindungssteg dünner ausgebildet ist als das Trägerelement aber dicker als die Membran. Zum einen können derartige Stege einfach zusammen mit dem Trägerelement bei der Strukturierung der Membran freigelegt werden. Zum anderen lassen sich dann auch die Piezowiderstände einfach mit in der Halbleitertechnik üblichen und erprobten Verfahren in solche Stege integrieren.

Die Membran eines Sensorelements der hier beschriebenen Art bewirkt mit zunehmender Auslenkung eine zunehmende Gegenkraft gegen eine weitere Auslenkung, so dass die Steifigkeit der Struktur zunimmt, je größer die von außen einwirkende Kraft ist. Die auf einem Verbindungssteg angeordneten Piezowiderstände liefern also bereits bei sehr geringen äußeren Kräften ein Ausgangssignal, da sich das Trägerelement sehr einfach aus der Mittellage auslenken lässt. Allerdings ist dieses Ausgangssignal nicht proportional zur einwirkenden Kraft, da der Verbindungssteg nicht proportional zur einwirkenden Kraft deformiert wird. Zur Linearisierung des Ausgangssignals der Piezowiderstände können mehrere symmetrisch angeordnete Verbindungsstege vorgesehen werden, beispielsweise zwei einander gegenüber angeordnete Stege oder auch vier jeweils paarweise einander gegenüber angeordnete Stege, die dann auch eine versteifende Wirkung auf die Membran haben. Außerdem begünstigt eine symmetrische Anordnung der Verbindungsstege eine symmetrische Deformation der Membran. Diese Varianten werden in den Fällen bevorzugt, in denen das erfindungsgemäße Sensorelement als Mikrofon oder Niedrigdrucksensor eingesetzt werden soll. Soll das erfindungsgemäße Sensorelement als Beschleunigungssensor eingesetzt werden, so erweist es sich häufig als vorteilhaft, wenn das hier als seismische Masse wirkende Trägerelement nur einseitig, beispielsweise mit nur einem Verbindungssteg, mit dem Rahmen der Membran verbunden ist.

Mikromechanische Bauelemente werden in der Praxis meist in einem Schichtaufbau realisiert, der ein Substrat als Ausgangsschicht umfasst. In vielen Fällen wird als Substrat ein Siliziumwafer verwendet, auf dessen Oberseite und ggf. auch auf dessen Rückseite weitere Schichten aufgebracht werden. Das Substrat ist in der Regel deutlich dicker als die übrigen Schichten des Schichtaufbaus. Die einzelnen Strukturelemente des erfindungsgemäßen Sensorelements können in vorteilhafter Weise in einem solchen Schichtaufbau ausgebildet werden, indem das Trägerelement und die Verbindungsstege aus dem Substrat herausstrukturiert werden und die Membran in dem Schichtaufbau über dem Substrat realisiert wird. Bei dieser Variante sind keine von Standardverfahren der Mikromechanik abweichenden Maßnahmen bei der Herstellung erforderlich.

Bei dem mikromechanischen Strukturelement mit Sensorfunktion kann es sich aber beispielsweise auch um ein Paddel handeln. Je nach Orientierung des Paddels parallel oder senkrecht zur Membran können so Beschleunigungen senkrecht oder parallel zur Membran des Sensorelements erfasst werden. Zur Messwerterfassung werden die Piezowiderstände auch hier im Bereich der maximalen mechanischen Spannung angeordnet, also am festgelegten Ende des Paddels. Ein derartiges Sensorelement kann dann als kombinierter Sensor für dynamischen Druck in Verbindung mit Beschleunigung verwendet werden, insbesondere als piezoresistiver Niedrigdrucksensor oder piezoresistives Mikrofon kombiniert mit einem piezoresistiven Beschleunigungssensor.

Schließlich sei an dieser Stelle noch die Möglichkeit erwähnt, im Bereich des Trägerelements zumindest Bestandteile eines thermischen Sensors zu integrieren, wie beispielsweise Widerstände eines Massenflusssensors oder Dioden eines Infrarotdetektors. Die Anordnung dieser Bestandteile im Bereich des Trägerelements, die lediglich über Verbindungsstege und die sehr schlecht Wärme leitende Membran mit dem Rahmen verbunden ist, gewährleistet eine gute thermische Entkopplung.

### Zeichnungen

Wie bereits voranstehend ausführlich erörtert, gibt es verschiedene Möglichkeiten, die Lehre der vorliegenden Erfindung in vorteilhafter Weise auszugestalten und weiterzubilden. Dazu wird einerseits auf die dem Patentanspruch 1 nachgeordneten Patentansprüche und
andererseits auf die nachfolgende Beschreibung mehrerer Ausführungsbeispiele der Erfindung anhand der Zeichnungen verwiesen.
- Fig. 1: zeigt die Draufsicht auf eine Vorstufe des erfindungsgemäßen Sensorelements,
- Fig. 2a, 2b: zeigen zwei Schnittdarstellungen durch das in Fig. 1 dargestellte Sensorelement,
- Fig. 3: zeigt ebenfalls eine Schnittdarstellung durch ein Sensorelement, welches eine alternative Herstellung der Sensorstruktur zeigt, wie es in Fig. 1 dargestellt ist,
- Fig. 4: zeigt die Draufsicht auf das Sensorelement gemäß der Figur 3,
- Fig. 5: zeigt eine Draufsicht und eine Schnittdarstellung eines erfindungsgemäßen Sensorelements, das ausgehend von dem in Fig. 1 dargestellten Sensorelement hergestellt worden ist.

### Beschreibung der Ausführungsbeispiele

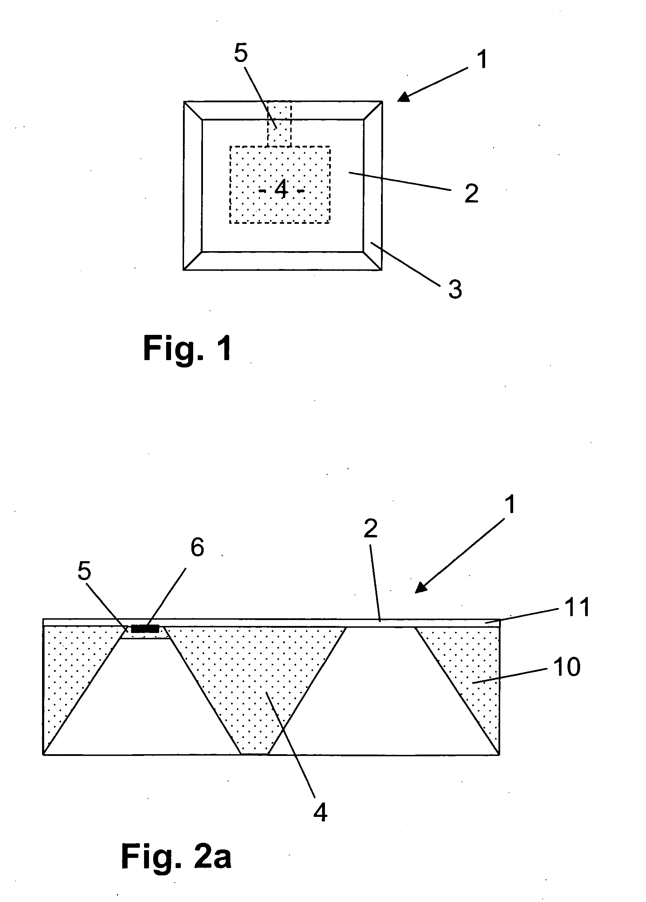

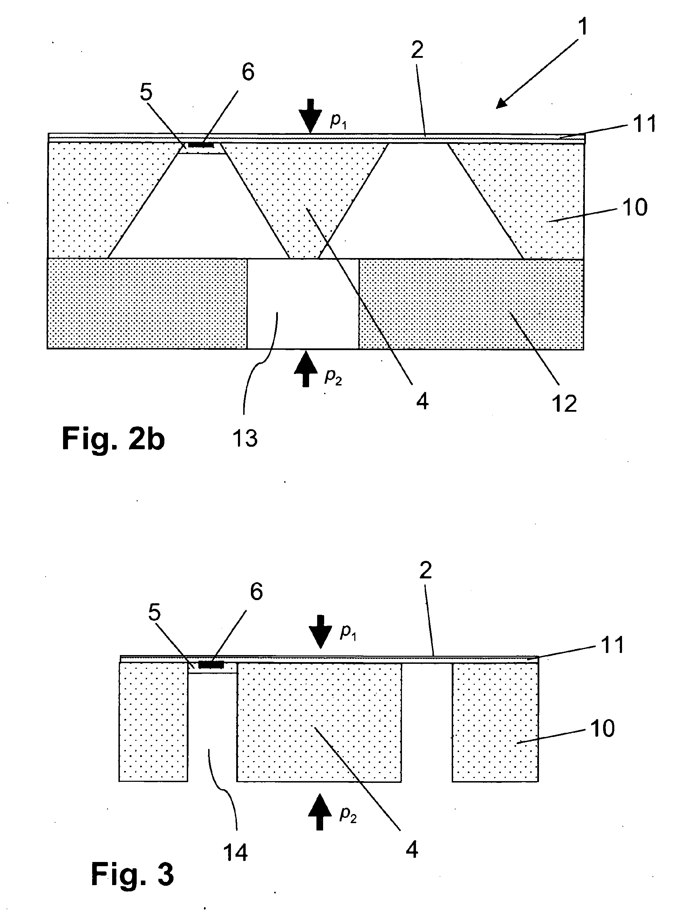

In den Figuren 1 und 2a, b ist ein mikromechanisches Sensorelement 1 mit einer geschlossenen Membran 2 dargestellt, die in einem Rahmen 3 aufgespannt ist. Im Bereich der Membran 2 ist erfindungsgemäß ein Trägerelement 4 ausgebildet, das über einen Verbindungssteg 5 mit dem Rahmen 3 verbunden ist. Fig. 2a verdeutlicht, dass im Bereich des Verbindungsstegs 5 Piezowiderstände 6 zur Detektion einer Deformation des Verbindungsstegs 5 angeordnet sind.

Im hier dargestellten Ausführungsbeispiel ist das Trägerelement 4 mit dem Verbindungssteg 5 in Form eines einseitig am Rahmen 3 festgelegten Paddels 4, 5 realisiert. Der Verbindungssteg 5 ist deutlich dünner ausgebildet als das Trägerelement 4 aber dicker als die Membran 2, was ebenfalls durch Fig. 2a veranschaulicht wird.

Das Sensorelement 1 ist ähnlich wie ein piezoresistiver Beschleunigungssensor mit einem in einem Rahmen 3 aufgehängten Paddel 4, 5 aufgebaut. Das verdickte, freie Paddelende, das als seismische Masse fungiert, wird ausgelenkt, wenn das Sensorelement 1 einer Beschleunigung ausgesetzt wird. Dabei verformt sich der relativ dünne Verbindungssteg 5. Erfindungsgemäß wurde diese Struktur durch eine dünne, geschlossene Membran 2 ergänzt, so dass das Paddel 4, 5 nicht völlig frei im Rahmen 3 schwingen kann.

Aufgrund der Verformung des Verbindungsstegs 5 ändern die hier angeordneten Piezowiderstände 6 ihren Widerstandswert. Gewöhnlich werden vier Widerstände so angeordnet, dass je zwei Widerstände ihren Wert aufgrund der auftretenden mechanischen Spannung erhöhen, während zwei Widerstände ihren Wert aufgrund dieser mechanischen Spannung erniedrigen. Werden die Widerstände dann zu einer Wheatstonebrücke verschaltet, so erhält man als Ausgangssignal eine beschleunigungsproportionale Spannung.

Die in den Figuren 1 und 2a dargestellte Sensorstruktur kann relativ einfach ausgehend von einem Siliziumwafer als Substrat 10 hergestellt werden. Dazu wird die Oberseite des Substrats 10 mit einer Passivierung 11, beispielsweise in Form eines thermischen Oxids und einer Nitrid-Passivierung, versehen. Das Paddel 4, 5 wird von der Waferrückseite ausgehend, beispielsweise durch eine KOH-Ätzung, freigelegt. Dazu kann die Waferrückseite im Bereich der seismischen Masse 4 entweder durch eine entsprechende Rückseitenmaskierung passiviert werden oder mit einer p+-Dotierung versehen werden, so dass hier ein Ätzstopp eintritt. In dem Bereich des Substrats 10, der den Verbindungssteg 5 bilden soll, wird ebenfalls ein pn-Ätzstopp realisiert. Durch eine p-Diffusion in dem Bereich, der bis auf die Passivierung 11 freigeätzt werden soll, wird dann ein pn-Ätzstopp verhindert. Die Membran 2 wird hier also durch die Passivierung 11 gebildet und muss eventuell durch eine zusätzliche LPCVD-Nitridschicht in Zugspannung versetzt werden. Alternativ kann die dielektrische Membran auch aus anderen Materialien bestehen, beispielsweise aus Kunststoff. Möglich wäre auch eine Folie oder ein zuvor aufgebrachter Lack. Die Membran könnte aber auch aus Metal bestehen.

Fig. 2b zeigt eine Aufbauvariante des in Fig. 2a dargestellten Sensorelements 1 als Niedrigdrucksensor mit einem anodisch gegen die Substratrückseite gebondeten Glaswafer 12. Die Druckeinwirkung kann hier sowohl von oben erfolgen - p1 - als auch von der Rückseite des Sensorelements 1 - p2 - über eine Bohrung 13 im Glaswafer 12. Diese ist so angeordnet, dass sie eine Auslenkung der seismischen Masse 4 möglichst nicht behindert. Der hier dargestellte Aufbau kann in ein Gehäuse eingebaut werden oder auch im Rahmen eines Hybridaufbaus auf eine Keramik geklebt werden.

Die in Fig. 1 dargestellte Sensorstruktur kann nicht nur in einem anisotropen Ätzverfahren, wie in Verbindung mit Fig. 2a beschrieben, hergestellt werden, sondern auch durch Trenchen. In diesem Fall werden die seismische Masse 4 und der Verbindungssteg 5 durch Gräben 14 in der Waferrückseite freigelegt, die durch im wesentlichen senkrechte Seitenwände begrenzt werden, was in Fig. 3 dargestellt ist.

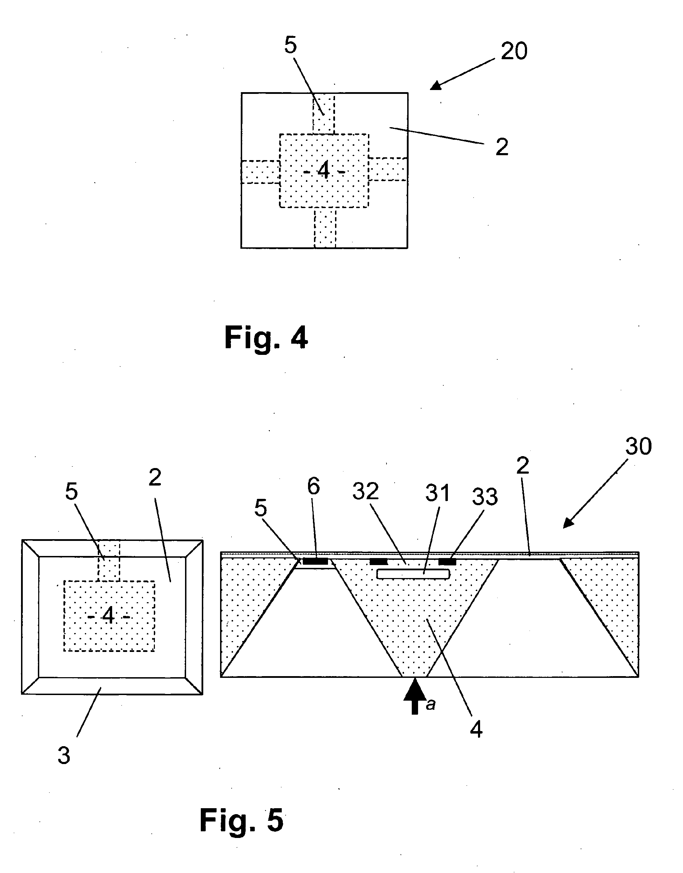

Fig. 4 zeigt ein Sensorelement 20, das sich besonders gut zum Erfassen niedriger Drücke eignet. Der einzige Unterschied zu der in Fig. 1 dargestellten Variante ist, dass die Aufhängung des Trägerelements 4 hier nicht nur einen Verbindungssteg sondern vier Verbindungsstege 5 umfasst, die jeweils paarweise einander gegenüber angeordnet sind, so dass das Trägerelement 4 an allen vier Seiten des rechteckigen Rahmens 3 festgelegt ist. Wie im Fall der Fig. 1 ist auch die Oberfläche des Sensorelements 20 durch eine sehr flexible dielektrische Membran 2 geschlossen. Dadurch lassen sich mit den Sensorelementen 1 und 20 auch sehr niedrige Drücke, wie z. B. Schalldruck, erfassen. Der Differenzdruck p2 - p1 erzeugt eine Auslenkung des Trägerelements 4 und damit eine Verbiegung der Verbindungsstege 5, in die Piezowiderstände 6 diffundiert sind. Das durch den Biegestress hervorgerufene Signal der Piezowiderstände 6 ist proportional zum anliegenden Differenzdruck.

Fig. 5 zeigt ein erfindungsgemäßes Sensorelement 30, das eine Weiterbildung des in den Figuren 1 und 2a dargestellten Sensorelements 1 darstellt, so dass im Folgenden nur die zusätzlichen Merkmale dieser Variante erläutert werden.

Im Bereich des Trägerelements 4 des Sensorelements 30 ist ein mikromechanisches Strukturelement als zusätzliches Sensorfunktionselement ausgebildet, und zwar eine Kaverne 31, die von einer Membran 32 überspannt wird. Diese Membran 32 wird durch das Schichtsystem auf dem Substrat 10 und eine dünne, an dieses Schichtsystem angrenzende Substratschicht gebildet, in die Piezowiderstände 33 zur Detektion einer Deformation der Membran 32 integriert sind. Diese sind im Randbereich der Membran 32 bzw. über dem Randbereich der Kaverne 31 angeordnet.

Während die Grundstruktur des Sensorelements 30 in Bulk-Mikromechanik gefertigt wird, wie in Verbindung mit den Figuren 2a und 3 erläutert, werden die Kaverne 31 und die Membran 32 mit Verfahren der Oberflächenmikromechanik erzeugt.

Die in Fig. 5 dargestellte Variante eines erfindungsgemäßen Sensorelements 30 stellt einen monolithisch integrierten Beschleunigungs- oder Niedrigdrucksensor kombiniert mit einem Absolutdrucksensor für höhere Druckbereiche dar, wobei die Messwerterfassung bei beiden Sensorfunktionen piezoresistiv erfolgt. Bei einer auf das Sensorelement 30 einwirkenden Beschleunigung a wird das Paddel 4, 5 nach unten gedrückt. Die dielektrische Membran 2 ist hier so ausgelegt, dass sie die Auslenkung des Paddels 4, 5 nicht oder nur unwesentlich einschränkt. Die bei einer Auslenkung des Paddels 4, 5 auftretende mechanische Spannung im Bereich des Verbindungsstegs 5 wird durch die Piezowiderstände 6 in ein Signal umgewandelt, das proportional zur einwirkenden Beschleunigung a ist. Bei Verwendung als Niedrigdrucksensor oder Mikrofon erfolgt die Messwerterfassung entsprechend.

Das Sensorelement 30 kann beispielsweise im Rahmen eines Reifendruck-Überwachungssystems im Kfz zum Einsatz kommen. Derartige Systeme werden in der Regel mit einer Batterie gespeist. Ein großer Teil der Energie wird zum Verarbeiten des Drucksignals und zum Übertragen der berechneten Druckwerte an einen externen Empfänger benötigt. Um mit einer möglichst kleinen Batterie eine möglichst lange Standzeit zu erreichen, sollte der Druckerfassungs-, Berechnungs- und Übertragungsvorgang nur gestartet werden, wenn das Auto fährt. Als Trigger für die Druckerfassung mit der Drucksensorkomponente des Sensorelements 30 kann nun mit Hilfe der Beschleunigungssensorkomponente die bei der Radumdrehung auftretende Zentrifugalkraft erfasst werden. Alternativ dazu können auch die bei der Radumdrehung auftretenden Geräusche erkannt werden, wenn die Grundstruktur des Sensorelements 30 als Mikrofon ausgelegt ist.

## Patentansprüche

1. Mikromechanisches Sensorelement (30) mit einer geschlossenen Membran (2), die in einem Rahmen (3) aufgespannt ist,
wobei
- im Bereich der Membran (2) mindestens ein Trägerelement (4) ausgebildet ist, das über mindestens einen Verbindungssteg (5) mit dem Rahmen (3) verbunden ist, und
- im Bereich des Verbindungsstegs (5) Piezowiderstände (6) zur Detektion einer Deformation angeordnet sind, und
- im Bereich des Trägerelements (4) mindestens ein weiteres Sensorfunktionselement ausgebildet ist,
**dadurch gekennzeichnet dass**
im Bereich des Trägerelements (4) mindestens eine Kaverne (31) unter einer Membran (32) ausgebildet ist und über dem Randbereich der Kaverne (31) Piezowiderstände (33) zur Detektion einer Deformation dieser Membran (32) über der Kaverne (31) angeordnet sind,

2. Sensorelement (30) nach Anspruch 1, **dadurch gekennzeichnet, dass** der Verbindungssteg (5) dünner ausgebildet ist als das Trägerelement (4) aber dicker als die Membran (2).

3. Sensorelement (20) nach einem der Ansprüche 1 oder 2, **dadurch gekennzeichnet, dass** mindestens zwei einander gegenüber angeordnete Verbindungsstege (7) vorgesehen sind.

4. Sensorelement (30) nach einem der Ansprüche 1 bis 3, wobei das Sensorelement (30) in einem ein Substrat (10) umfassenden Schichtaufbau realisiert ist, **dadurch gekennzeichnet, dass** das Trägerelement (4) und der mindestens eine Verbindungssteg (5) aus dem Substrat (10) herausstrukturiert sind und dass die Membran (2) in dem Schichtaufbau (11) über dem Substrat (10) realisiert ist.

5. Sensorelement (30) nach Anspruch 1, **dadurch gekennzeichnet, dass** es sich bei diesem Sensorfunktionselement um ein mikromechanisches Strukturelement handelt und dass die Messwerterfassung bei diesem weiteren Strukturelement piezoresistiv erfolgt.

6. Sensorelement nach einem der Ansprüche 1 oder 5, **dadurch gekennzeichnet, dass** im Bereich des Trägerelements mindestens ein senkrecht oder parallel zu Membran orientiertes Paddel ausgebildet ist und dass im Bereich des festgelegten Endes des Paddels Piezowiderstände zur Detektion einer Auslenkung des Paddels angeordnet sind.

7. Sensorelement nach Anspruch 1, **dadurch gekennzeichnet, dass** dieses Sensorfunktionselement Bestandteil eines thermischen Sensors, insbesondere eines Massenflusssensors, eines Neigungswinkelsensors, eines Thermopiles oder eines Infrarotdetektors, ist.

8. Verwendung eines Sensorelements (30) gemäß einem der Ansprüche 1 bis 4, als Beschleunigungssensor oder als Drucksensor, insbesondere als piezoresistiver Niederdrucksensor oder piezoresistives Mikrofon.

9. Verwendung eines Sensorelements (30) gemäß Anspruch 1, als kombinierter Sensor für Beschleunigung oder dynamischen Druck in Verbindung mit Absolutdruck, insbesondere als piezoresistiver Beschleunigungssensor oder als piezoresistives Mikrofon kombiniert mit einem piezoresistiven Drucksensor.

10. Verwendung eines Sensorelements gemäß Anspruch 6, als kombinierter Sensor für dynamischen Druck in Verbindung mit Beschleunigung, insbesondere als piezoresistiver Niedrigdrucksensor oder als piezoresistives Mikrofon kombiniert mit einem piezoresistiven Beschleunigungssensor.

## Claims

1. Micromechanical sensor element (30) having a closed diaphragm (2) which is clamped in a frame (3),
- at least one carrier element (4) which is connected to the frame (3) via at least one connecting web (5) being formed in the region of the diaphragm (2), and
- piezoresistors (6) for detecting deformation being arranged in the region of the connecting web (5), and
- at least one further sensor functional element being formed in the region of the carrier element (4),
**characterized in that**
at least one depression (31) is formed under a diaphragm (32) in the region of the carrier element (4), and piezoresistors (33) for detecting deformation of this diaphragm (32) above the depression (31) are arranged over the edge region of the depression (31).

2. Sensor element (30) according to Claim 1, **characterized in that** the connecting web (5) is thinner than the carrier element (4) but thicker than the diaphragm (2).

3. Sensor element (20) according to either of Claims 1 and 2, **characterized in that** at least two connecting webs (7) which are arranged opposite one another are provided.

4. Sensor element (30) according to one of Claims 1 to 3, the sensor element (30) being implemented in a layer structure comprising a substrate (10), **characterized in that** the carrier element (4) and the at least one connecting web (5) are structured from the substrate (10), and **in that** the diaphragm (2) is implemented above the substrate (10) in the layer structure (11).

5. Sensor element (30) according to Claim 1, **characterized in that** this sensor functional element is a micromechanical structural element, and **in that** the measured values are acquired piezoresistively in this further structural element.

6. Sensor element according to either of Claims 1 and 5, **characterized in that** at least one paddle which is oriented perpendicular or parallel to the diaphragm is formed in the region of the carrier element, and **in that** piezoresistors for detecting deflection of the paddle are arranged in the region of the fixed end of the paddle.

7. Sensor element according to Claim 1, **characterized in that** this sensor functional element is part of a thermal sensor, in particular a mass flow sensor, an inclination angle sensor, a thermopile or an infrared detector.

8. Use of a sensor element (30) according to one of Claims 1 to 4 as an acceleration sensor or as a pressure sensor, in particular as a piezoresistive low-pressure sensor or a piezoresistive microphone.

9. Use of a sensor element (30) according to Claim 1 as a combined sensor for acceleration or dynamic pressure in conjunction with absolute pressure, in particular as a piezoresistive acceleration sensor or as a piezoresistive microphone in combination with a piezoresistive pressure sensor.

10. Use of a sensor element according to Claim 6 as a combined sensor for dynamic pressure in conjunction with acceleration, in particular as a piezoresistive low-pressure sensor or as a piezoresistive microphone in combination with a piezoresistive acceleration sensor.

## Revendications

1. Elément micromécanique de détection (30) qui présente une membrane fermée (2) tendue dans un cadre (3),
au moins un élément de support (4) qui est relié par au moins une traverse de liaison (5) au cadre (3) étant formé au niveau de la membrane (2),
des piézo-résistances (6) de détection d'une déformation étant disposées au niveau de la traverse de liaison (5),
au moins un autre élément à fonction de détection étant formé au niveau de l'élément de support (4), **caractérisé en ce que**
au moins une cavité (31) est formée en dessous d'une membrane (2) au niveau de l'élément de support (4) et
**en ce que** des piézo-résistances (33) de détection d'une déformation de cette membrane (32) sont disposées sur la bordure de la cavité (31) au-dessus de la cavité (31).

2. Elément de détection (30) selon la revendication 1, **caractérisé en ce que** la traverse de liaison (5) est plus mince que l'élément de support (4) mais plus épaisse que la membrane (2).

3. Elément de détection (20) selon l'une des revendications 1 ou 2, **caractérisé en ce qu'**au moins deux traverses de liaison (7) disposées l'une en face de l'autre sont prévues.

4. Elément de détection (30) selon l'une des revendications 1 à 3, l'élément de détection (30) étant réalisé dans une structure stratifiée qui comprend un substrat (10), **caractérisé en ce que** l'élément de support (4) et la ou les traverses de liaison (5) sont formés par structuration d'un substrat (10) et **en ce que** la membrane (2) est réalisée dans la structure stratifiée (11) au-dessus du substrat (10).

5. Elément de détection (30) selon la revendication 1, **caractérisé en ce que** cet élément à fonction de détection est un élément structurel micromécanique et **en ce que** la détection des valeurs de mesure par cet autre élément structurel s'effectue par voie piézo-résistive.

6. Elément de détection selon l'une des revendications 1 ou 5, **caractérisé en ce qu'**au moins une ailette orientée perpendiculairement ou parallèlement à la membrane est formée au niveau de l'élément de support et **en ce que** des piézo-résistances de détection d'une déviation de la palette sont disposées au niveau de l'extrémité fixe de la palette.

7. Elément de détection selon la revendication 1, **caractérisé en ce que** cet élément à fonction de détection fait partie d'un détecteur thermique, en particulier d'un détecteur de débit massique, d'un détecteur d'angle d'inclinaison, d'une thermopile ou d'un détecteur d'infrarouge.

8. Utilisation d'un élément de détection (30) selon l'une des revendications 1 à 4 comme détecteur d'accélération ou comme détecteur de pression, en particulier comme détecteur piézo-résistif de basse pression ou comme microphone piézo-résistif.

9. Utilisation d'un élément de détection (30) selon la revendication 1 comme détecteur combiné de l'accélération ou d'une pression dynamique en liaison à une pression absolue, en particulier comme détecteur piézo-résistif d'accélération ou comme microphone piézo-résistif combiné à un détecteur piézo-résistif de pression.

10. Utilisation d'un élément de détection selon la revendication 6 comme détecteur combiné d'une pression dynamique associé à une accélération, en particulier comme détecteur piézo-résistif de basse pression ou comme microphone piézo-résistif combiné avec un détecteur piézo-résistif d'accélération.
